# EUROPEAN PATENT APPLICATION

(11) **EP 1 202 595 A1**
(43) Date of publication of application: **02.05.2002**
(21) Application number: 00123132.3
(22) Date of filing: 25.10.2000
(51) Int. Cl.: H04Q 11/00

(54) **Underwater optical transmission system and switchable underwater repeater**

(71) Applicant: PIRELLI SUBMARINE TELECOM SYSTEMS ITALIA S.p.A., 20126 Milano (IT)
(72) Inventor: Rocca, Corrado, 20052 Monza (MI) (IT); Mariani, Gian Agostino, 20033 Desio (MI) (IT)
(74) Representative: Giannesi, Pier Giovanni

(57) **Abstract**

An underwater optical transmission system (1) comprises: a first (2) and a second (3) terminal transmission station; a branching unit (4) located between the said first and second terminal stations; a first line (5) connecting the said first station to the said branching unit, a second line (6) connecting the said branching unit to the said second terminal station; a third line (7) connecting the said branching unit to a third terminal station (8), having a first pair of optical fibres (71) connected at one end to the said branching unit.

The third connecting line additionally comprises a switching module (21) having a first optical switch (22) with four ports (I₁, I₂, O₁, O₂) to which the second ends of the optical fibres of the first pair (71) are connected.
The optical fibres belonging to a second pair (73) are connected to the remaining two ports (I₂, O₂) of the said first optical switch (22).
The first optical switch (22) is designed to connect the optical fibres of the said first pair (71) together in a short circuit in a first switching state, or, alternatively, to connect the said first pair of optical fibres (71) to the said second pair of optical fibres (73) in a second switching state.
In a bidirectional configuration, the switching module (21) can comprise a second optical switch (23).

## Description

### Technical field

The present invention relates to an underwater optical transmission system. The present invention also relates to an underwater optical repeater. The present invention further relates to a method for configuring the optical transmission in an underwater optical system.

### Prior art

An underwater optical transmission system can be used to provide long-distance communications by means of optical cables laid on the sea bed. In typical configurations, a connecting line comprising at least one optical cable is laid, by means of suitably equipped ships, between two points A and B on land, separated by an area of sea; the two terminations of the cable are connected to terminal stations established on the land. Normally, the connecting line also includes a certain number of optical repeaters, to compensate for losses due to attenuation of the optical signal.

A connection to a third point C which may be present on the land (an island, for example) can be made by means of a branch from the connecting line between A and B. For this purpose, a branching unit can be inserted in the line. From this branching unit, a further optical cable can be used to connect the third point C, at which a further terminal station is installed.

For example, US Patent 5,526,157, in the name of Fujitsu Limited, describes an underwater optical system comprising a main pair of optical fibres and a secondary pair of optical fibres. A branching joint box separates the secondary pair of fibres into a first and a second pair of branch optical fibres. These first and second pairs of branch optical fibres are inserted into a further optical cable. An end box is mounted at the end of the optical cable comprising the branch optical fibres, to permit an expansion of the system and its maintenance.

Various applications of the end box are illustrated in Patent '157. In a first application, the branch optical fibres are connected together to form a return loop in the end box, in such a way as to provide an additional optical communication path between two main terminal stations. In a second application, the ends of the pairs of branch optical fibres are left open in the end box, in order to provide reserve lines for an expansion of the system. When the system is expanded, the end box is pulled up onto a suitable ship and the branch optical fibres are connected to an optical cable connected to a third terminal station, if necessary by breaking the retrun loop of the branch optical fibres described above. At the end of the connection stage, the end box, together with the optical cable for connection to the third terminal station, is again sunk for laying on the sea bed.

The Applicant has observed that the solution described in Patent '157 does not permit a rapid reconfiguration of the system if there is a change in the operating conditions (in case of a fault on one of the lines, for example) or if there is a change in the data traffic requirements. In particular, a reconfiguration of the system always requires the use of a ship equipped to retrieve the termination module from the sea bed. This entails a considerable consumption of resources and time for recovery and/or reconfiguration, which may be unacceptable.

Patent application EP 930,799, in the name of Alcatel, describes a branching unit for a wavelength division multiplexing (WDM) underwater optical system. The branching unit has an optical switch and an optical multiplexer having a certain number of "loop back" optical paths passing through the switch. The switch is reconfigurable so that individual channels of a WDM signal can be selectively coupled to an output port of the branching unit leading to a main line. The branching unit permits the reconfiguration of wavelength and/or capacity between a main line ("trunk") and a branch line ("spur"), so that it is possible to disconnect from the spur or increase the data transfer capacity of the spur, according to requirements.

US Patent 5,838,477, in the name of Kokusai Denshin Denwa K.K., describes an optical branching unit for an underwater system including switching means consisting of optical circulators capable of reversing their direction of rotation. A pair of optical fibres forming a connection between a first and a second point is branched to a third point. If there is a fault in the branch, the pair of optical fibres is connected directly between the first and the second point, without being branched to the third point.

The solutions described in Patent Application '799 and Patent '477 refer to switches located within the branching unit.

The Applicant has observed that the use of optical components controllable by electrical or other signals (hereafter termed "active optical components"), such as the switches described in the patents cited above, makes it necessary to introduce electronic circuits for controlling and monitoring the optical components within the branching unit. These electronic circuits inevitably have a more or less high probability of failure. Although this does not represent a particular problem in many types of applications in the field of optical telecommunications, since the circuit can be rapidly replaced or repaired in case of failure, it must be borne in mind that in an underwater optical system the replacement or repair of a failed component is a costly and complicated operation, since the component has to be retrieved from the sea bed, resulting in a long interruption of the traffic on the line affected by the failure. For this reason, the reliability requirements for the components used are more stringent in an underwater optical system. Indeed, the components and modules used must be proved to have a service life of many years (typically 25 years) in very variable operating conditions.

In particular, the Applicant has observed that, if an interruption is caused by the cutting of a cable in one of the connections between the terminal stations, there may be strong pulses of electric current caused by the interruption of the electrical power supply line to the repeaters located along the transmission line. This can cause undesired spurious changes of state of the optical switches located within the branching unit as described in the documents cited above, or can damage them. In some cases, this can lead to the total loss of the ability to control the switches from the land, and to an inevitable interruption of the data traffic on the line.

In the eventuality described above, the branching unit would have to be retrieved from the sea bed to be repaired or replaced, with an inevitable interruption of the main connecting line. The latter event is particularly undesirable, since the main connecting line normally provides the greatest transfer capacity for data sent to the main stations of the system. It must also be borne in mind that the operation of retrieving the branching unit is a long and costly operation, since all three of the underwater cables connecting the terminal stations are connected to the branching unit. This inevitably increases the time and cost of restoring the system.

The Applicant has tackled the technical problem of producing an underwater system having terminal stations located on a main connecting line and at least one secondary terminal station connected by means of a branching unit, and providing the possibility of reconfiguring from the land, according to the requirements, the data traffic between the terminal stations located on the main line and the secondary terminal station, in particular while keeping unchanged the reliability and service life requirements for the components located along the main connecting line.

### Brief description of the invention

The Applicant has found that this problem can be solved by providing a module which incorporates one or more optical switches in the spur, rather than in the main line. This makes it possible to use an optically passive branching unit having highly reliable components, while maintaining the capacity of reconfiguring from the land, in a highly flexible way, the data traffic between the terminal stations, according to the requirements. If there is a loss of control or a failure of the optical switches, only the spur is affected by the interruption, without the involvement of any module included in the main connecting line. This enables repair work to be carried out without the need to retrieve the branching unit from the sea bed.

The Applicant has also found that by incorporating the aforesaid switches within one of the repeaters of the spur it is possible to exploit the service channel used for monitoring the amplifiers contained in the repeater, in order to control the switches (in other words, to operate the switches and/or receive information on their switching state). The incorporation of the switches within the repeater also makes it possible to exploit a module for underwater use which is already present in the spur, instead of providing a new module for this purpose.

In a first aspect, the invention relates to an underwater optical system comprising:
a first and a second terminal transmission station;
at least one underwater branching unit located between the said first and second terminal stations;
a first line connecting the said first station to the said branching unit, comprising at least a first optical fibre connected at one end to the said branching unit;
a second line connecting the said branching unit to the said second terminal station, comprising at least a second optical fibre connected at one end to the said branching unit;
a third line connecting the said branching unit to a third terminal station, comprising a first pair of optical fibres, connected at one end to the said branching unit;
the said branching unit optically connecting the said first pair of optical fibres of the said third connecting line to the said first and the said second optical fibre respectively;
characterized in that
the said third connecting line comprises
a switching module comprising at least a first optical switch, the said first pair of optical fibres being connected at a second end to two ports of the said first optical switch;
a second pair of optical fibres connected at a first end to two other ports of the said first optical switch;
the said first optical switch being adapted to connect the optical fibres of the said first pair together in a short circuit in a first switching state, and to connect the said first pair of optical fibres to the said second pair of optical fibres in a second switching state.

In a preferred embodiment, the first connecting line and the second connecting line comprise, respectively, a third and a fourth optical fibre, whose first ends are connected to the said branching unit. Additionally, the third connecting line comprises a third and a fourth pair of optical fibres and the said switching module comprises at least a second optical switch. The optical fibres of the third pair have their second ends connected to two ports of the second optical switch, and the optical fibres of the fourth pair have their second ends connected to two other ports of the second optical switch. The second optical switch is adapted to connect the optical fibres of the said third pair together in a short circuit in a first switching state, and to connect the said third pair of optical fibres to the said fourth pair of optical fibres in a second switching state.

More particularly, the first connecting line and the second connecting line can additionally comprise, respectively, a fifth and a sixth pair of optical fibres, whose first ends are connected to the said branching unit. The branching unit optically connects the said fifth pair of optical fibres to the said sixth pair of optical fibres.

Advantageously, the switching module can be incorporated in a repeater located in the third connecting line.

The first and second optical switches can be 2x2 switches or can comprise combinations of 1x2 switches. Preferably, the switches are magneto-optical switches. Alternatively, the switches can be opto-mechanical, electro-optical, thermo-optical, or acousto-optical switches.

Advantageously, the branching unit can be optically passive.

Preferably, the third connecting line comprises an armoured optical cable between the branching unit and the switching module.

In a second aspect, the invention relates to a repeater for underwater use, comprising:
a sealed container,
at least a first optical switch enclosed in the said container,
a first and a second optical fibre, connected to two ports of the said first optical switch,
a first and a second amplification module enclosed in the said container, optically connected to two other ports of the said first optical switch.

In a preferred embodiment, the first optical switch is adapted to connect together the first and the second optical fibre in a short circuit in a first switching state, and to connect the first and the second optical fibre to the first and the second amplification module in a second switching state.
In a further preferred embodiment, the first optical switch is adapted to connect the first amplification module to the first optical fibre and the second amplification module to the second optical fibre in a first switching state, and to connect the first amplification module to the second optical fibre and the second amplification module to the first optical fibre in a second switching state.

The repeater according to the invention can also comprise:
at least a second optical switch enclosed in the said container,
a third and a fourth optical fibre, connected to two ports of the said second optical switch,
a third and a fourth amplification module optically connected to two other ports of the said second optical switch, enclosed in the said container.

In a preferred embodiment, the second optical switch is adapted to connect together the third and the fourth optical fibre in a short circuit in a first switching state, and to connect the said third and fourth optical fibre to the said third and fourth amplification module in a second switching state.

In a further preferred embodiment, the second optical switch is adapted to connect the third amplification module to the third optical fibre and the fourth amplification module to the fourth optical fibre in a first switching state, and to connect the third amplification module to the fourth optical fibre and the fourth amplification module to the third optical fibre in a second switching state.

In a third aspect, the invention relates to a method for configuring an optical transmission in an underwater optical transmission system. This method comprises:
- generating an optical signal in a first terminal station;
- transmitting the said optical signal along a first underwater cable to an underwater branching unit;
- sending the said optical signal from the said branching unit, through a second underwater cable, to a switching module;
- sending to the said switching module a command signal capable of selecting a switching state of at least one optical switch included in the said switching module;
- sending the said optical signal from the said switching module to the said branching unit, or, through a third underwater cable, to a second terminal station, according to the switching state of the said optical switch.

Preferably, the said command signal is a signal which overmodulates the said optical signal. The frequency of the said overmodulation signal can be in the range from 50 to 150 kHz. Preferably, the frequency of the said overmodulation signal is approximately 100 kHz.

Preferably, the method according to the invention additionally comprises the stage of sending a backward signal from the said switching module to the said first or the said second terminal station, the said backward signal comprising information on the said switching state.

The switching module can be included in a repeater, comprising at least one amplification module, in such a way that the backward signal can be produced by a modulation of the electric current of at least one pumping laser of the said amplification module.

Preferably, the frequency of the backward signal is in the range from 7 to 15 kHz, and even more preferably it is approximately 10 kHz.

Advantageously, the optical signal is a wavelength division multiplexing (WDM) signal.

### Brief description of the figures

Some examples of the present invention are described below, with reference to the attached drawings, provided solely for explanatory purposes and without restrictive intent, in which:
- Figure 1 shows schematically an example of an underwater optical transmission system according to the invention;
- Figure 2 shows schematically an optical switch with four ports;
- Figure 3 shows schematically the system of Figure 1 in a first configuration;
- Figure 4 shows schematically the system of Figure 1 in a second configuration;
- Figure 5 shows schematically a second example of an underwater system according to the invention, with three branching units;
- Figure 6 shows schematically a first embodiment of a repeater which includes optical switches, usable in the underwater system according to the invention;
- Figure 7 shows schematically a second embodiment of a repeater which includes optical switches, usable in the underwater system according to the invention.

### Detailed description of examples of the invention

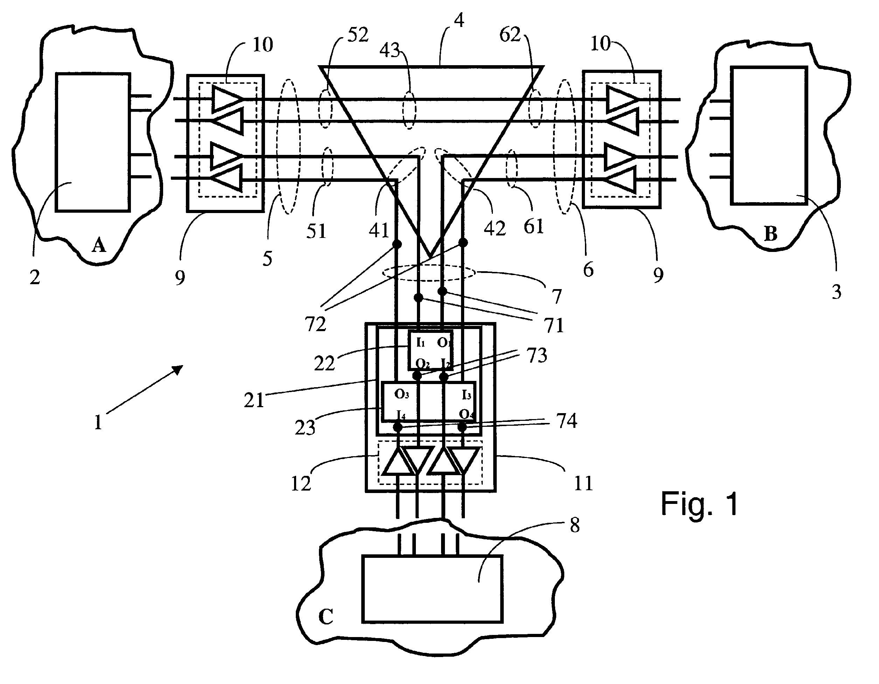

Figure 1 shows schematically an example of an underwater optical transmission system 1 comprising a first terminal transmission and/or receiving station 2, located at a first point A on land, and a second terminal transmission and/or receiving station 3, located at a first point B on land. Points A and B are separated by at least one area of sea.

At least one underwater branching unit 4 is located between the terminal stations 2 and 3: the connection between the terminal stations 2 and 3 and the branching unit 4 is made by means of a first connecting line 5 and a second connecting line 6 respectively. The connecting lines 5 and 6 comprise at least one underwater optical cable.

From the branching unit 4, a third connecting line 7 is used to connect a third transmission and/or receiving station 8, located at a third point C on land. The third connecting line 7 will be referred to here as a "spur". The third connecting line 7 comprises at least one underwater optical cable. The terminal stations 2, 3, 8 are suitable for sending optical signals at predetermined wavelengths, preferably in a region of the electromagnetic spectrum extending from 1520 to 1620 nm, along the connecting lines 5, 6, 7. These optical signals can be used to transmit data and voice traffic between the terminal stations of the underwater system. For brevity, reference will be made in a general way to data traffic only in the remainder of this description. Preferably, the transmission of the optical signals is of the wavelength division multiplexing (WDM) type.

Typically, the first and the second connecting line 5, 6 comprise one or more repeaters 9. Each of the repeaters 9 comprises a certain number of amplification modules 10, enclosed in a sealed container for underwater use.

Preferably, the amplification modules 10 comprise optical amplifiers, and even more preferably fibre amplifiers, for example erbium-doped optical fibres.

The spur 7 can comprise one or more repeaters 11, depending on the distance between the branching unit 4 and the terminal station 8 located at point C. The repeaters 11 comprise a certain number of amplification modules 12, enclosed in a sealed container for underwater use. Preferably, the amplification modules 12 comprise optical amplifiers, and even more preferably fibre amplifiers, for example erbium-doped optical fibres. For short distances (less than a few tens of km) the amplification modules 12 of the spur can be omitted.

Each of the underwater optical cables of the connecting lines 5, 6 includes at least one optical fibre. In a typical bidirectional configuration, shown in Fig. 1, each of the underwater optical cables 5, 6 includes at least one pair of optical fibres 51, 61. Each fibre of the pairs of optical fibres 51, 61 transmits the data traffic in one direction (from A towards the branching unit and vice versa, from B towards the branching unit and vice versa). The optical fibres 51, 61 are connected at one end to the branching unit 4. In particular, the optical fibres 51, 61 are spliced with the optical fibres contained in suitably designed "pigtails" emerging from the branching unit 4.

To form the connection with the terminal station 8 located at C, the underwater optical cable of the spur 7 includes at least two optical fibres 71, one for transmitting data traffic from the branching unit 4 to point C and the other for transmitting data traffic in the opposite direction. In a typical bidirectional configuration, shown in Fig. 1, the underwater optical cable of the spur 7 includes two other optical fibres 72. The optical fibres 71, 72 are connected at one end to the branching unit 4, in a similar way to that described for the pairs of optical fibres 51, 61.

The optical connection between the optical fibres 51, 61 of the connecting lines 5, 6 and the optical fibres 71, 72 of the- spur 7 is made, within the branching unit 4, by means of the optical paths identified in Fig. 1 by the numerical references 41, 42. These optical paths are advantageously made in an optically passive way, for example by splicing optical fibres together. This ensures a high reliability and long service life of the branching unit 4.

In the configuration shown in Fig. 1, the optical fibres 51, 61, 71, 72, together with the optical paths 41, 42 created within the branching unit 4, enable bidirectional data traffic to be transmitted between the terminal stations A and C, B and C, or additionally A and B, as specified in detail below.

The underwater optical cables of the connecting lines 5, 6 can also incorporate further optical fibres designed to form a direct connection between the terminal stations 2, 3, in such a way that a main connecting line is formed between points A and B. In the preferred embodiment shown in Fig. 1, each connecting line 5, 6 incorporates a pair of optical fibres, identified by the numerical references 52, 62 respectively, to enable bidirectional data traffic to be transmitted. The optical fibres 52, 62 are connected at one end to the branching unit 4, in a similar way to that described above. The direct optical connection, in other words the connection without branching to the third terminal station 8 located at point C, between the pairs of optical fibres 52, 62 is made by means of the optical paths identified in Fig. 1 by the numerical reference 43. These optical paths are advantageously made in an optically passive way, for example by splicing the optical fibres together, in such a way as to ensure the high reliability and long service life of the branching unit 4.

The spur 7 comprises a switching module 21, located between the branching unit 4 and the terminal station 8 at point C. The switching module 21 comprises at least one optical switch 22. In a preferred configuration, the optical switch 22 is of the four-port type (with two inputs and two outputs). The optical fibres 71 of the spur are connected at their second ends to two of the four ports of the switch 22. Two other optical fibres 73 are connected to the remaining two ports of the switch 22, to complete the connection to the terminal station 8.

In the bidirectional configuration shown in Fig. 1, the switching module 21 preferably comprises a second optical switch 23. In a particularly preferred configuration, the second.optical switch 23 is of the type having four ports, the different ports being connected, respectively, to the optical fibres 72 leading to the branching unit and to two other optical fibres 74 leading to the terminal station 8.

The switching module 21 also comprises electrical and/or electronic circuits, known to those skilled in the art, for operating the optical switches 22, 23.

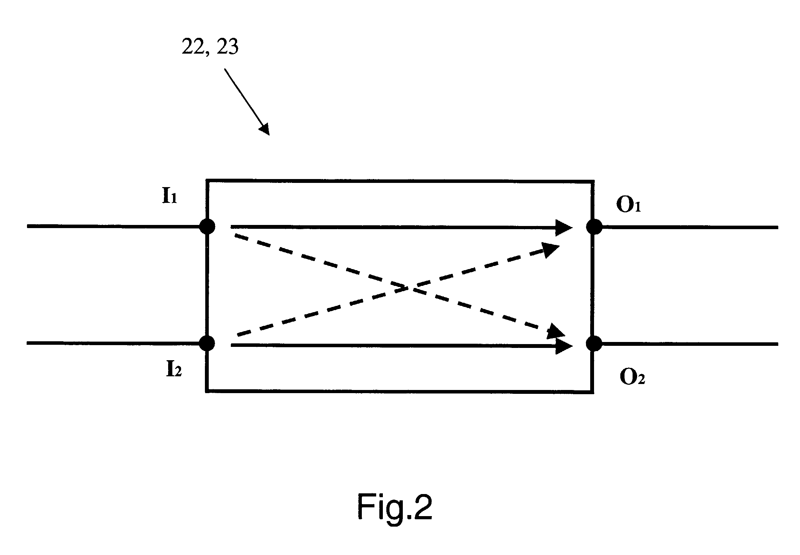

Fig. 2 shows a four-port optical switch 22, 23, usable in the switching module 21 of the underwater optical system according to the invention. The switch 22, 23 has two inputs I₁, I₂ and two outputs O₁, O₂, and can assume different switching states. In a first switching state, identified by the arrows in solid lines in Fig. 2, the input I₁ is connected to the output O₁, and the input I₂ is connected to the output O₂, ("bar" state). In a second switching state, identified by the arrows in dashed lines, the input I₁ is connected to the output O₂, and the input I₂ is connected to the output O₁, ("cross" state) . The change from the "bar" state to the "cross" state is normally made by means of an electrical command pulse. The optical switch 22, 23 of Fig. 2 can preferably be made in one piece (a 2x2 switch) or can comprise combinations of switches, each having one input and two outputs (1x2 switches). In the latter case, it is possible for the optical switch 22, 23 to assume switching states different from those described above (for example, with the input I₁ connected to the output O₁ and the other two ports left unconnected to each other). Advantageously, a 2x2 optical switch made in one piece can save space in the switching module 21 described above. In other configurations, not shown, switches with NxM ports can be used in the invention, for example by using two of the input ports and two of the output ports in a way similar to that described with reference to Fig. 2, and leaving any other ports unconnected or available for other services within the optical system.

In a preferred embodiment, the optical switches 22, 23 are magneto-optical switches, which make use of the rotation of the plane of polarization of an electromagnetic wave within particular crystals as a function of the intensity of an external applied electric field (Faraday effect). By way of, example, models of optical switches which can be used are magneto-optical switches of the YS-1200 or YS-1000/YS-1100 types, marketed by the FDK Corporation.

Other types of optical switches that can be used are, for example, opto-mechanical, electro-optical, thermo-optical, and acousto-optical types.

Returning to Fig. 1, the method of connecting the switch 22 and the switch 23 to the optical fibres of the spur 7 is as follows.

With regard to the first optical switch 22, the optical fibres 71 leading to the branching unit 4 are connected to a first input port, identified as I₁, and to a first output port, identified as O₁. The optical fibres 73 leading to the terminal station 8 are connected to the second input port I₂ and to the second output port O₂.

Similarly, in the bidirectional configuration shown in Fig. 1, in the case of the second optical switch 23, the optical fibres 72 leading to the branching unit 4 are connected to a first input port, identified as I₃, and to a first output port, identified as O₃. The optical fibres 74 leading to the terminal station 8 are connected to the second input port I₄ and to the second output port O₄.

Advantageously, the switching module 21 can be incorporated in the first repeater 11 of the spur 7, as shown in Fig. 1. This makes it possible to use a sealed container for underwater use which is already provided in the system, without the need to provide a new container for a separate switching module. Additionally, as it will be more clearly highlighted in the remainder of the description, this makes it possible to use some of the electrical and electronic components of the amplification modules 12 for controlling the operation of the switches 22, 23. In this configuration, the optical switches 22, 23 are optically connected to the amplifiers incorporated in the amplification modules 12.

Preferably, the underwater optical cable connecting the branching unit 4 to the switching module 21, comprising the optical fibres 71, and the optical fibres 72 if present, is an armoured underwater optical cable (with single or multiple armour). By using an armoured cable it is possible to decrease the probability of the cutting or damaging of the cable connecting the branching unit 4 to the switching module 21, and to provide better protection of the connection between the switching module 21 and the terminal stations 2, 3 located at points A, B. The use of an armoured cable is particularly advantageous in the case in which the branching unit 4 is laid in shallow waters. The use of armoured cables can also be provided at other points of the underwater optical system 1, for example for connections in the vicinity of the terminal stations located on land, where the sea bed slopes up towards the surface.

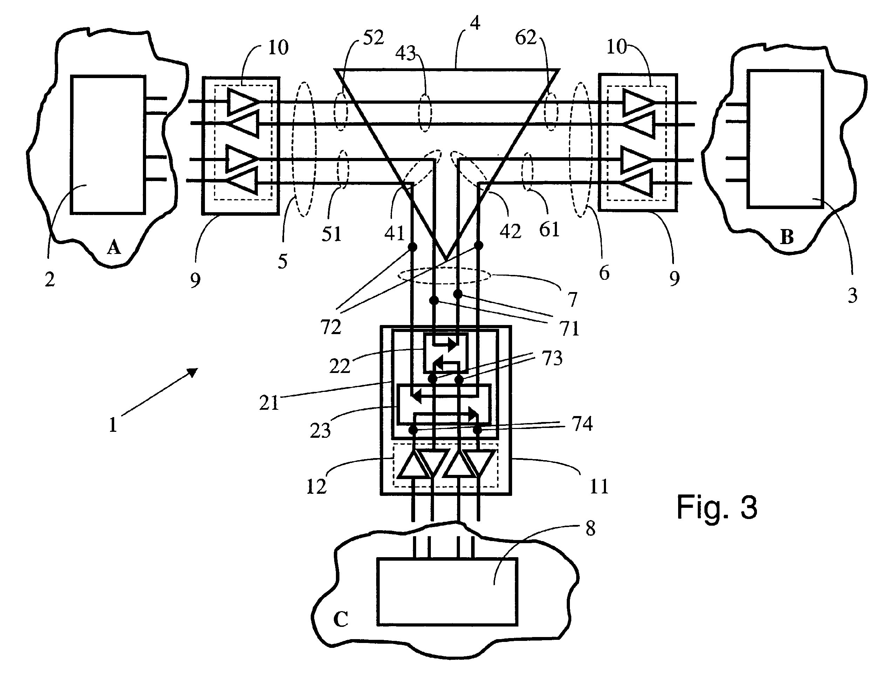

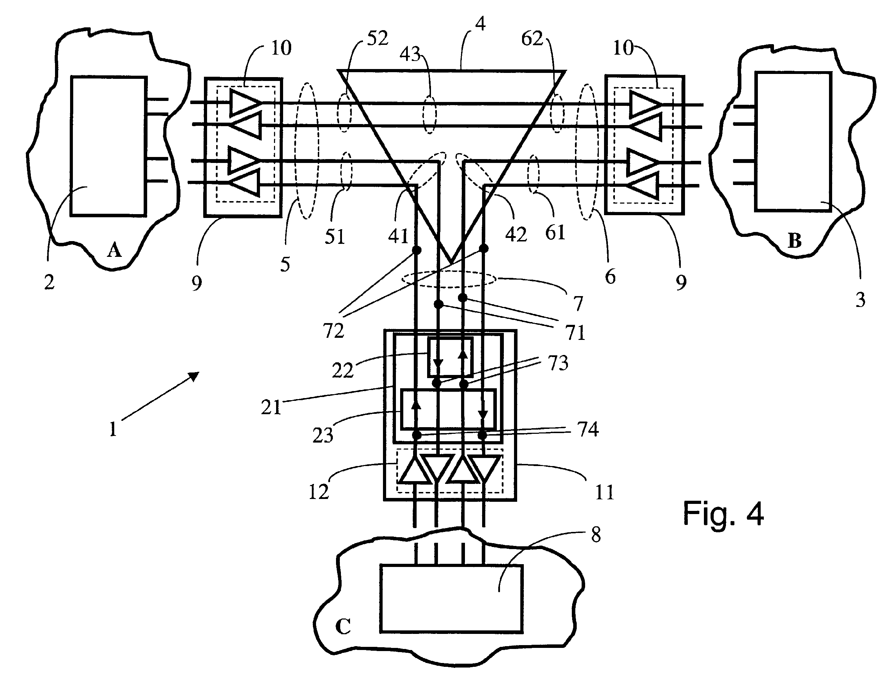

Figs. 3 and 4 show, respectively, the configurations assumed by the underwater optical system of Fig. 1 when the optical switches 22, 23 are in the "bar" state and in the "cross" state described above.

In Fig. 3, the optical switches 22, 23 are both in the "bar" state, so that a short circuit is formed between the optical fibres of each of the pairs 71, 72, 73, 74. In this configuration, the optical fibres 51, 71, 72, 61, together with the optical paths 41, 42 created within the branching unit 4, form a connecting line between A and B, in addition to the main connecting line formed by the pairs of optical fibres 52, 62 and by the optical paths 43 created within the branching unit. On the other hand, the optical fibres 73, 74 form a closed circuit with the terminal station 8. In the configuration shown in Fig. 3, an optical signal transmitted, for example, from the terminal station 2 located at A is branched towards the switching module 21 by means of the branching unit 4. The optical switch 22, incorporated in the switching module 21, sends the optical signal back to the branching unit 4 and, consequently, to the terminal station 3 located at B. In the bidirectional configuration, an optical signal transmitted from the terminal station 3 located at B can travel in the opposite direction towards the terminal station 2 located at A, because of the "bar" switching state of the optical switch 23. The spur terminal station 8 located at point C, however, is excluded from the data traffic passing from and to the main terminal stations 2 and 3 located at points A and B.

In Fig. 4, the optical switches 22, 23 are both in the "cross" state, in such a way that they form, respectively, an optical connection between the optical fibres 71 and 73 and an optical connection between the optical fibres 72 and 74. In this configuration, the optical fibres 51, 71, 72, 73, 74, 61, together with the optical paths 41, 42 created within the branching unit 4, form two bidirectional optical connections between the main terminal stations 2 and 3 located at points A and B and the spur terminal station 8 located at point C. In the configuration shown in Fig. 4, an optical signal transmitted, for example, from the terminal station 2 located at A is branched towards the switching module 21 by means of the branching unit 4. The optical switch 22, incorporated in the switching module 21, allows the optical signal to pass towards the terminal station 8 located at C. The optical switch 22 also permits the passage of an optical signal transmitted from the terminal station 8 located at C towards the branching unit 4, and, consequently, towards the terminal station 3 located at B. In the bidirectional configuration, optical signals can be exchanged between the terminal stations located at A, C and in B, C, in the opposite direction to that described above, using the "cross" switching state of the optical switch 23.

Other possible configurations (not shown) can be obtained by keeping one of the switches 22, 23 in the "bar" state and the other in the "cross" state. It is also possible to use a plurality of optical fibres and a plurality of optical switches, according to the traffic requirements. For example, four optical switches with two inputs and two outputs can be included within the switching module 21, in such a way as to control four bidirectional optical paths between the main terminal stations 2 and 3 located at points A and B and the spur terminal station 8 located at point C. In other configurations which are less preferable, it is possible to use optical switches with more than two input and output ports, configured in such a way as to provide the functions described above. For example, the configurations described in Figs. 3-4 can also be produced by using an optical switch with four inputs and four outputs, made in one piece or comprising combinations of switches with smaller numbers of inputs and outputs. In all cases, different configurations can be obtained, according to the switching states set in the optical switches, in order to meet different requirements.

In a preferred embodiment, the switching module 21 can comprise a control circuit which causes one or both of the switches 22, 23 to enter the "bar" state if there is a failure of the electrical power supply, due, for example, to the cutting of the cable in the spur. Thus, even if there is a failure or loss of power in the spur downstream from the switching module, the data traffic in the underwater optical system can continue on the main line.

The use of the switching module 21 makes it possible to give the system a function of reconfiguring the data traffic from the land, according to requirements. For example, the switches 22, 23 can be set to the "bar" state (Fig. 3) by any one of the terminal stations 2, 3 located at A, B, during the construction of the spur terminal station 8, or during its maintenance, or during the repair of any fault in the optical cable located between the switching module 21 and the terminal station 8. The spur terminal station 8 can also be disconnected if there is a change in the specifications for data traffic in the optical system, for example for a reallocation of the available transmission capacity of the node C to another spur terminal station. It should also be noted that, if the spur terminal station 8 at point C is connected in such a way as to control four bidirectional optical paths for the main terminal stations 2, 3 located at A and B, it is possible to disconnect only two of the said bidirectional paths, the corresponding transmission capacity being reallocated to the main connecting line or to another secondary station and a connection to point C being maintained by means of the remaining two optical paths.

The connection to the terminal station 8 located at point C can be restored by means of a command which sets the optical switches 22, 23 to the "cross" state: this command can be sent from any one of the terminal stations located remotely on land, or from the spur station C, by means of a monitoring signal. This permits a rapid reconfiguration of the data traffic in the optical system, without the need to retrieve the switching module 21.

In a particularly preferred configuration, the possibility of reconfiguring the optical switches at the spur station C is disabled, so that the configuration of the traffic between the main stations A and B cannot be modified from the said station.

If there is an interruption on the main line between points A and B, for example at a point between the branching unit 4 and the terminal station 2 located at point A, an active connection can still be maintained between the terminal station 3 located at B and the terminal station 8 located at C, with the optical switches 22, 23 set to the "cross" state. The fact that the switching module 21 is included in the spur ensures that this function is maintained even if the cutting of the main line cable causes an anomalous current pulse in the direction of the branching unit 4. This is because, if the optical switches were connected within the branching unit 4 and this pulse had an intensity that the switches were damaged and jammed in the "bar" state, the terminal station 8 located at point C would be entirely isolated from the network, resulting in the interruption of the data traffic throughout the underwater optical system 1, owing to the consequent loss of control of the switches from any terminal station. The only way to restore communication in this case would be to retrieve the branching unit 4, with all the inconveniences described above.

The command for the change of state of the switches 22, 23 can advantageously be carried by the service channel which is also used for monitoring the repeaters located along the connecting lines. This service channel can include a low-frequency overmodulation signal of the optical transmission channel or channels, sent by the terminal stations 2, 3, 8 to the repeaters 9, 11. Preferably, the frequency of this overmodulation signal is in the range from 50 to 150 kHz, and more preferably it is approximately 100 kHz. Together with the signals for controlling the amplifiers, the service channels can contain the appropriate commands for operating the optical switches 22, 23. A backward signal, carrying information on the operation of the amplifiers, is typically sent by the repeaters 9, 11 to the terminal stations 2, 3, 8. This backward signal can be produced by using a low-frequency signal modulating the electric current of at least one pumping laser of the amplifiers. Preferably, the frequency of the backward signal is in the range from 7 to 15 kHz, and more preferably it is approximately 10 kHz. Information on the switching state of the switches 22, 23 can be added to this backward signal.

One of the main advantages of the underwater system according to the invention lies in the possibility of producing a reconfiguration of the data traffic from the land, according to requirements, while using a branching unit which is completely passive in optical terms, in other words a branching unit in which there are no active optical components. A branching unit which is completely passive in optical terms is highly reliable, since it does not incorporate either active optical components or their operating and monitoring circuits, which would inevitably increase the probability of faults. Since the optical switches 22, 23 are located along a spur in the underwater optical system according to the invention, any fault in these switches can be repaired by retrieving only the switching module 21, without retrieving the branching unit 4, and therefore without interrupting the data traffic on the main line as well. The said retrieval of the switching module 21 only is advantageously faster than the retrieval of the branching unit 4, since the switching module 21 is connected to two cables only, whereas the branching unit 4 is connected to three cables.

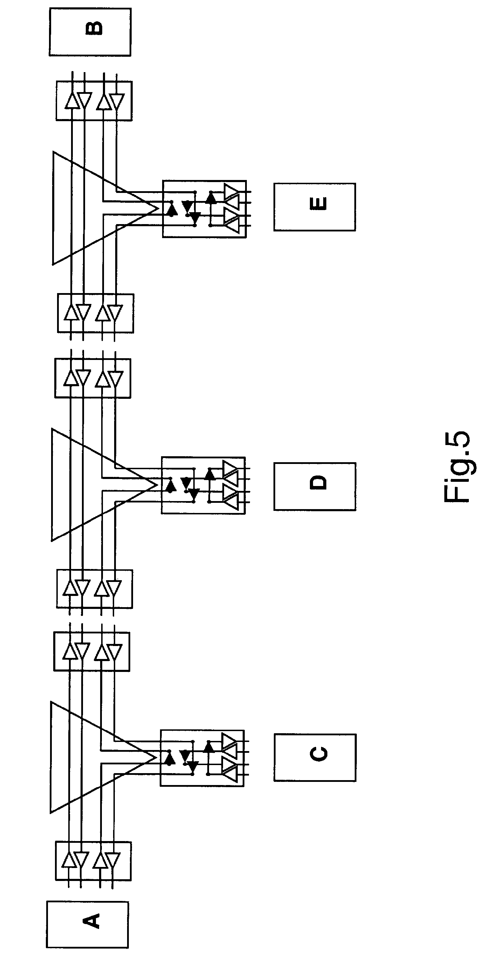

The underwater system according to the invention can comprise more than one branching unit. For example, Fig. 5 shows schematically a configuration having three branching units, with spurs leading to points C, D, E from a main connecting line formed between points A and B. The spurs can include switching modules as described above, according to requirements. In Fig. 5, each spur includes one switching module.

As stated above, in a preferred embodiment the optical switches can be fitted within a repeater on the spur. If there is more than one repeater on the spur, the switches are preferably fitted in the repeater closest to the branching unit.

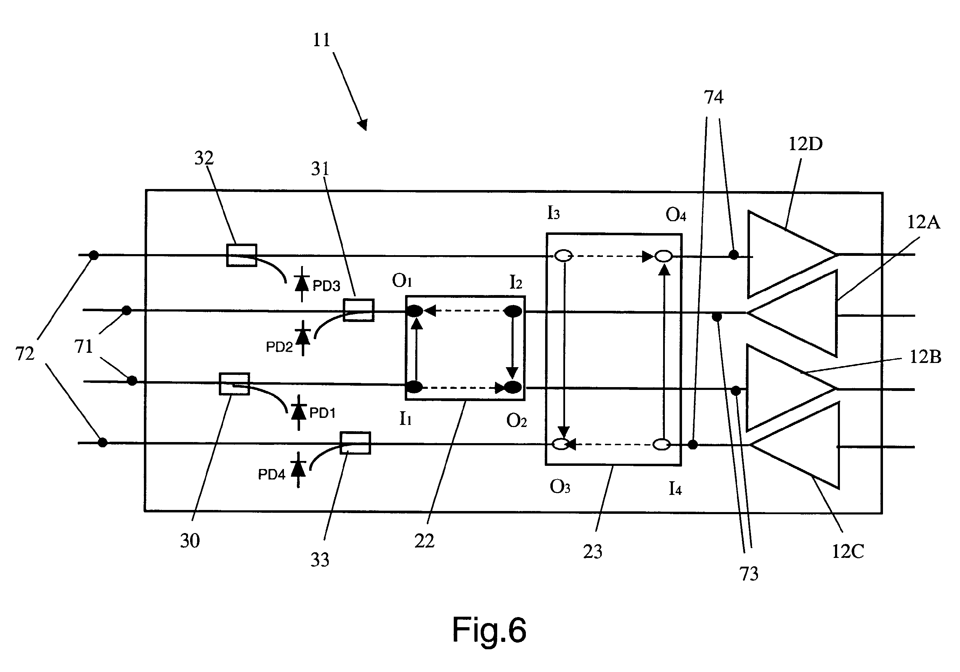

Fig. 6 shows schematically a first preferred example of a repeater 11 which can be used in a spur of the underwater system according to the invention. Where possible, the same numerical references as those of Fig. 1 are used in Fig. 6.

The repeater 11 comprises at least one optical switch 22 and at least two amplification modules 12A, 12B, enclosed within a sealed container for underwater use. In a particularly preferred embodiment, the amplification modules are erbium-doped optical fibre amplifiers. Preferably, the optical switch 22 is of the four-port type, as described previously. Two optical fibres 71, suitable for transferring data traffic towards the main line, are connected to a first input I₁ and a first output O₁ of the switch 22. The amplification modules 12A and 12B are optically connected to a second input I₂ and a second output O₂ of the switch 22 by means of two other lengths of optical fibre 73.

A first photodetector PD1, for example a photodiode, can be connected, by a suitable coupler 30, to the fibre entering one of the inputs of the switch 22, for example the input I₁. A second photodetector PD2 can be connected, by a suitable coupler 31, to the fibre leaving one of the outputs of the switch 22, for example the output O₁.

For a bidirectional configuration, the repeater 11 preferably comprises a second optical switch 23 and two further amplification modules 12C and 12D. Further pairs of optical fibres 72, 74 are connected to the switch 23 and to the amplification module 12C and 12D in a similar way to that described for the connection of the first switch 22 and the first amplification modules 12A and 12B.

A third photodetector PD3 can be connected, by a suitable coupler 32, to the fibre entering one of the inputs of the switch 23, for example the input I₃. A fourth photodetector PD4 can be connected, by a suitable coupler 33, to the fibre leaving one of the outputs of the switch 23, for example the output O₃.

The repeater 11 also comprises known optical and electronic equipment, not shown in Fig. 6, included in the amplification modules 12A, 12B, 12C, 12D, such as pumping lasers, further monitoring photodetectors, setting and monitoring circuits, etc.

The coupler 30 allows to extract the optical channel carrying the service channel, arriving from one of the remote stations located on land, this channel being received and converted into a suitable electrical signal by the photodetector PD1. This signal can contain a signal for operating the optical switch 22, in other words a command for changing from a first switching state to a second switching state.

In the bidirectional configuration, a similar operating signal is managed by the photodetector PD3. In this configuration, the two switches can both be operated by a signal extracted either by the photodetector PD1 or by the photodetector PD3, in such a way that the switching state of the switches can be changed from both ends of the main line. It is also possible to use at least one of the photodiodes (not shown in the figure) used for monitoring the amplification modules 12A or 12C to enable the switch operating commands to be sent additionally from the spur terminal station.

The photodetector PD2 can be used to monitor the switching state of the optical switch 22. This is because, in the embodiment shown in Fig. 6, when the switch 22 is in the "bar" state the photodetector PD2 located at the output of the switch receives less optical power than that found at the output of the switch when the latter is in the "cross" state, owing to the proximity of the amplifying element 12A.

Similar monitoring is carried out by means of the photodetector PD4 in the bidirectional configuration described above.

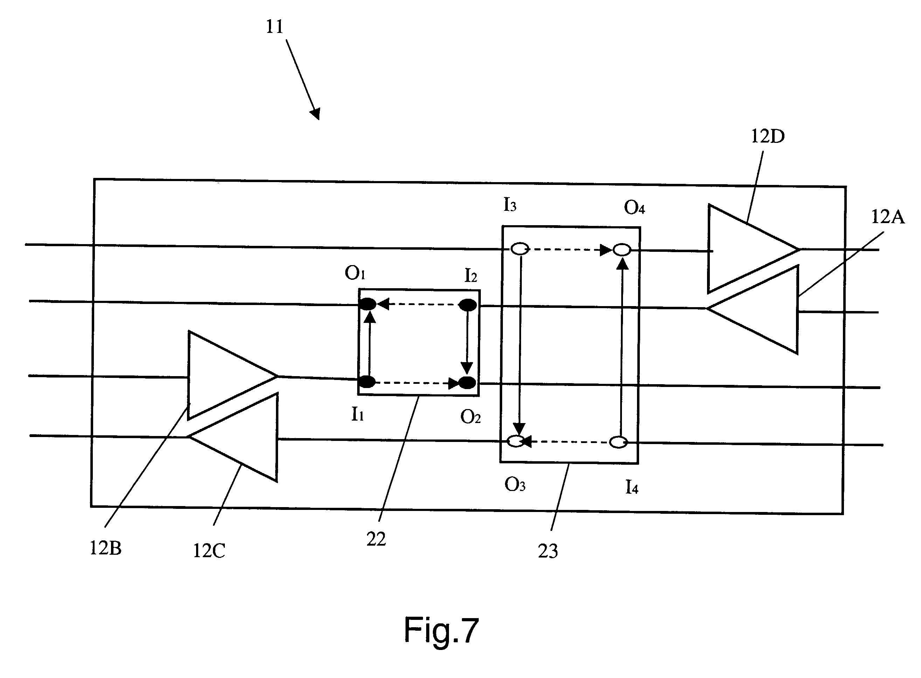

Fig. 7 shows schematically a second preferred example of a repeater 11 which can be used in a spur of the underwater system according to the invention. In this configuration, at least one of the amplification modules 12A, 12B is connected to a first optical switch 22 in such a way that one of them is directed towards the branching unit and the other towards the spur terminal station. For a bidirectional configuration, the amplification modules 12C, 12D can be connected on opposite sides of a second optical switch 23.

The arrangement of the amplification modules shown in Fig. 7 enables various functions to be implemented. Firstly, the switches 22, 23 can be operated from both terminal stations of the main line by using the photodiodes contained in the amplification modules 12B, 12C, and therefore without using additional photodiodes. The operation can also be carried out from the spur terminal station, by means of one of the photodiodes contained in the amplification module 12A. An advantage of this configuration lies in the fact that it is possible to implement monitoring of the switching state of the switches 22, 23 by using the modulation, by a low-frequency signal for example, of the operating current of the amplifiers' pumping lasers. For example, a request concerning the state of the switches 22, 23 arriving from the terminal station located at A can be received by one of the photodiodes contained in the amplification module 12B; the response can be provided by modulating the current of one of the pumping lasers contained in the amplification module 12C. A request arriving from the terminal station located at B can be dealt with by one of the photodiodes of the amplification module 12C or by one of the photodiodes of the amplification module 12D, according to the switching state of the switches 22, 23. The response to the request is provided by modulating the current of one of the pumping lasers contained in the amplification module 12B or in the amplification module 12A. A monitoring procedure similar to that described above can also be implemented from and to the spur terminal station located at C. The presence of the amplifier 12B (and of the amplifier 12C in the bidirectional configuration) on the branching unit side also enables the optical signal to be amplified even when the switches 22, 23 are set to the "bar" state, in other words when the spur terminal station is isolated from the communications. This is particularly advisable when the length of the connecting cable between the branching unit and the switches 22, 23 is approximately equal to that between the branching unit and the first repeaters 9 towards the terminal station 2 located at A and towards the terminal station 3 located at B.

## Claims

1. Underwater optical transmission system (1) comprising:
a first (2) and a second (3) terminal transmission station;
at least one underwater branching unit (4) located between the said first and second terminal stations;
a first line (5) connecting the said first station to the said branching unit, comprising at least a first optical fibre connected at one end to the said branching unit;
a second line (6) connecting the said branching unit to the said second terminal station, comprising at least a second optical fibre connected at one end to the said branching unit;
a third line (7) connecting the said branching unit to a third terminal station (8), comprising a first pair of optical fibres (71), connected at one end to the said branching unit;
the said branching unit optically connecting the said first pair of optical fibres of the said third connecting line to the said first and the said second optical fibre respectively;
**characterized in that**
the said third connecting line comprises
a switching module (21) comprising at least a first optical switch (22), the said first pair of optical fibres (71) being connected at a second end to two ports (I₁, O₁) of the said first optical switch (22);
a second pair of optical fibres (73) connected at a first end to two other ports (I₂, O₂) of the said first optical switch (22);
the said first optical switch (22) being adapted to connect the optical fibres of the said first pair (71) together in a short circuit in a first switching state, and to connect the said first pair of optical fibres (71) to the said second pair of optical fibres (73) in a second switching state.

2. System according to Claim 1, **characterized in that**
the said first connecting line (5) and the said second connecting line (6) comprise, respectively, a third and a fourth optical fibre, the first ends of the said third and fourth optical fibres being connected to the said branching unit (4);
the said third connecting line comprises a third (72) and a fourth (74) pair of optical fibres;
the said switching module (21) comprises at least a second optical switch (23);
the said third pair of optical fibres (72) having their second ends connected to two ports (I₃, O₃) of the said second optical switch (23);
the said fourth pair of optical fibres (74) having their second ends connected to two other ports (I₄, O₄) of the said second optical switch (23);
the said second optical switch (23) being adapted to connect the optical fibres of the said third pair (72) together in a short circuit in a first switching state, and to connect the said third pair of optical fibres (73) to the said fourth pair of optical fibres (74) in a second switching state.

3. System according to Claim 1 or 2, **characterized in that**
the said first connecting line (5) and the said second connecting line (6) further comprise a fifth (52) and a sixth (62) pair of optical fibres, whose first ends are connected to the said branching unit (4);
the said branching unit (4) optically connecting the said fifth pair of optical fibres (52) to the said sixth pair of optical fibres (62).

4. System according to any one of the preceding claims, **characterized in that** the said third connecting line comprises a repeater (11), the said switching module (21) being included in the said repeater (11).

5. System according to any one of the preceding claims, **characterized in that** the said first and second optical switches (22, 23) are 2x2 switches.

6. System according to any one of the preceding claims, **characterized in that** the said first and second optical switches (22, 23) are magneto-optical switches.

7. System according to any one of the preceding claims, **characterized in that** the said branching unit (4) is optically passive.

8. Repeater for underwater use (11), comprising:
a sealed container,
at least a first optical switch (22) enclosed in the said container,
a first and a second optical fibre, connected to two ports of the said first optical switch (22),
a first and a second amplification module (12A, 12B) enclosed in the said container, optically connected to two other ports of the said first optical switch.

9. Repeater according to Claim 8, **characterized in that** the said first optical switch (22) is adapted to connect together the said first and second optical fibres in a short circuit in a first switching state, and to connect the said first and second optical fibres to the said first and second amplification modules in a second switching state.

10. Repeater according to Claim 8, **characterized in that** the said first optical switch (22) is adapted to connect the said first amplification module to the said first optical fibre and the said second amplification module to the said second optical fibre in a first switching state, and to connect the said first amplification module to the said second optical fibre and the said second amplification module to the said first optical fibre in a second switching state.

11. Repeater according to Claims 8 to 10, **characterized in that** it comprises at least a second optical switch (23) enclosed in the said container,
a third and a fourth optical fibre, connected to two ports of the said second optical switch (23),
a third and a fourth amplification module (12C, 12D) optically connected to two other ports of the said second optical switch, enclosed in the said container.

12. Repeater according to Claim 11, **characterized in that** the said second optical switch (23) is adapted to connect together the said third and fourth optical fibres in a short circuit in a first switching state, and to connect the said third and fourth optical fibres to the said third and fourth amplification module in a second switching state.

13. Repeater according to Claim 11, **characterized in that** the said second optical switch (23) is adapted to connect the third amplification module to the said third optical fibre and the said fourth amplification module to the said fourth optical fibre in a first switching state, and to connect the said third amplification module to the said fourth optical fibre and the said fourth amplification module to the said third optical fibre in a second switching state.

14. Method for configuring an optical transmission in an underwater optical transmission system (1) comprising:
- generating an optical signal in a first terminal station (2, 3);
- transmitting the said optical signal along a first underwater cable to an underwater branching unit (4);
- sending the said optical signal from the said branching unit (4), through a second underwater cable, to a switching module (21);
- sending to the said switching module (21) a command signal capable of selecting a switching state of at least one optical switch (22) included in the said switching module (21);
- sending the said optical signal from the said switching module (21) to the said branching unit (4), or, through a third underwater cable, to a second terminal station (8), according to the switching state of the said optical switch (22).

15. Method according to Claim 14, **characterized in that** the said command signal is an overmodulation signal of the said optical signal.

16. Method according to Claim 15, **characterized in that** the frequency of the said overmodulation signal is in the range from 50 to 150 kHz.

17. Method according to any one of Claims 14 to 16, **characterized in that** it further comprises the step of:
- sending a backward signal from the said switching module to the said first or the said second terminal station (2, 3, 8), the said backward signal comprising information on the said switching state.

18. Method according to Claim 17, the said switching module being included in a repeater, the said repeater comprising at least one amplification module, **characterized in that** the said backward signal is produced by a modulation of the electric current of at least one pumping laser of the said amplification module.

19. Method according to Claim 18, **characterized in that** the frequency of the said backward signal is in the range from 7 to 15 kHz.

20. Method according to any one of Claims 14 to 19, **characterized in that** the said optical signal is a WDM signal.
